# DEMANDE DE BREVET EUROPEEN

(11) **EP 1 640 065 A2**
(43) Date de publication de la demande: **29.03.2006**
(21) Numéro de dépôt: 05291926.3
(22) Date de dépôt: 16.09.2005
(51) Int. Cl.: B01J 21/04, B01J 35/10, C01F 7/02

(54) **Nouveaux supports composites alumine sur alumine et méthode de préparation**

(30) Priorité: 28.09.2004 FR 0410287
(71) Demandeur: Institut Français du Pétrole, 92852 Rueil Malmaison Cédex (FR)
(72) Inventeur: Revel, Renaud, 38200 Serpaize (FR); Morin, Stéphane, 92500 Rueil Malmaison (FR); Fischer, Lars, 38200 Seysuel (FR); James, Christophe, 38200 Chuzelles (FR)

(57) **Abrégé**

L'invention concerne le domaine des supports de catalyseur présentant un volume poreux ayant une répartition au moins bimodale définissant ainsi une porosité principale et une porosité secondaire, la porosité principale étant de taille moyenne plus importante que la porosité secondaire.

## Description

### Domaine de l'invention

L'invention concerne le domaine des supports de catalyseur à surface spécifique inférieure à 90 m²/g et ayant un volume poreux supérieur à 0,3 cm³/g , ce volume poreux présentant une répartition au moins bimodale définissant une porosité principale et une porosité secondaire interconnectée, la porosité principale étant de taille moyenne plus importante que la porosité secondaire.

Le support selon l'invention permettra d'élaborer des catalyseurs pour effectuer une large gamme de réactions sur des coupes hydrocarbonées.

### Examen de l'art antérieur

Il est connu en catalyse que l'activité et/ou la sélectivité sont affectées par l'augmentation du temps de résidence des produits sur ou à proximité des sites catalytiques. Il s'agit là du problème connu sous le terme de limitation diffusionnelle intragranulaire qui peut constituer une limite au bon déroulement du processus d'accès des réactifs au site réactionnel.

On sait en effet que la cinétique intrinsèque d'une réaction chimique donnée est plus ou moins affectée par la vitesse d'apport des réactifs depuis le voisinage immédiat de la particule catalytique vers le site réactionnel situé à l'intérieur de la dite particule. Ce phénomène de limitation diffusionnel qui exprime la compétition entre la cinétique intrinsèque et l'apport de matière par diffusion au sein de la particule, dépend principalement de la taille de la particule et de la porosité de la particule, plus précisément de la structure de cette porosité.

Afin de pallier à ce problème, c'est à dire de s'affranchir des limitations diffusionnelles intragranulaires, plusieurs solutions sont proposées et décrites dans des brevets que nous citons et commentons ci-dessous.

On peut citer tout d'abord la solution du dépôt en croûte d'une phase catalytique sur un coeur constitué par le support. Par dépôt en croûte, on entend que la phase catalytique se situe dans une couche externe du support, appelée croûte, cette croûte pouvant avoir une épaisseur de quelques dizaines à quelques centaines de microns.
- Les brevets WO 02/41990, WO98/14274, US 6,280,608, US 6,486,370 et US 6,177,381 décrivent la préparation de solides de ce type dit solide "multi-couches". L'originalité de ces solides réside essentiellement dans le dépôt sous forme d'une croûte d'un support possédant la porosité requise, sur un autre support réfractaire appelé solide support. Le dépôt de cette croûte se fait par l'utilisation d'une suspension d'oxydes inorganiques qui enrobe le solide support. L'épaisseur de cette croûte varie de 40 à 400 microns. Dans un second temps, des métaux sont imprégnés dans ou sur la croûte pour une utilisation en déshydrogénation des paraffines.
- Le brevet WO 01/15803 décrit l'utilisation d'un catalyseur pour des applications en déshydrogénation des paraffines. Le support est constitué d'alumine poreuse. Sur le catalyseur final, le pourcentage de pores compris entre 60 Å et 350 Å doit être supérieur à 75% du volume poreux total du catalyseur. Le volume des pores compris entre 60 Å et 350 Å est supérieur à 0,5 cm3/g, et de préférence compris entre 0,6 et 0,8 cm3/g. Enfin, le volume des plus petits pores (inférieurs à 60 Å) ne doit pas excéder 0,05 cm3/g.
   Une densité de grain supérieure à 0,5 g/cm3 est revendiquée, qui correspond à celle de l'art antérieur. La technique employée pour mesurer la porosité est l'intrusion mercure. En outre, le catalyseur doit avoir une surface spécifique supérieure à 100 m²/g.
- Le brevet US 5,358,920 décrit l'utilisation d'un catalyseur pour la déshydrogénation des hydrocarbures. Le support utilisé est fabriqué en une seule étape de synthèse, par neutralisation d'un chlorure d'aluminium par de l'ammoniaque à 60-70°C et à pH compris entre 7,5 et 8,5. Le précipité résultant est remis en suspension pour être mis en forme par la technique de coagulation en goutte (oil drop selon la terminologie anglo-saxonne). Après calcination entre 600°C et 800°C sous un mélange air-eau, le support possède une forme cristallographique alumine théta. Ce support a une distribution poreuse bimodale, avec 40% du volume poreux occupé par les pores compris entre 1000 Å et 10000 Å. Il est clair pour l'homme du métier que cette méthode de synthèse en une étape ne peut donner lieu à l'obtention d'une porosité hiérarchisée, c'est à dire différenciée en au moins deux modes.
- Le brevet US 5,677,260 décrit la préparation et l'utilisation d'un catalyseur composite pour la déshydrogénation des paraffines en mono-oléfines. Le support employé est sous forme de billes de 1,4 à 2 mm de diamètre. Ce support est mésoporeux et de préférence utilise une alumine gamma (60 à 80% de cristallinité), de surface comprise entre 120 m²/g et 250 m²/g, d'un volume poreux compris entre 1,4 et 2,5 cm3/g. Au regard du diamètre des billes et de la surface spécifique considérée, les phénomènes de diffusion intragranulaire sont probablement très importants dans ce type de support.
- Le brevet US 4,914,075 décrit la composition d'un catalyseur de déshydrogénation. Le support est de l'alumine de surface spécifique comprise entre 50 m²/g et 120 m²/g et de densité de grain apparente supérieure à 0,5 g/cm3. Aucune indication n'est donnée sur le volume poreux, ni sur la taille des pores. La description de la fabrication du support montre clairement que ce support est fabriqué en une seule étape de synthèse, suivi d'une étape de calcination (800°C à 1020°C) suivant la nature de la phase d'alumine désirée (gamma, thêta ou alpha). D'après le brevet cité, il est préférable d'avoir de l'alumine thêta et ce à hauteur d'un minimum de 75% des cristallites (les autres pouvant être de l'alumine gamma ou de l'alumine alpha). Dans ce brevet, si plusieurs phases cristallographiques de l'alumine peuvent être présentes, il n'y a pas de notion d'ordre ou de hiérarchie entre ces phases.
- Le brevet US 4,672,146 décrit la composition d'un catalyseur de déshydrogénation. Le support est une alumine possédant une surface comprise entre 5 m²/g et 150 m²/g dont 18% du volume poreux total est associé à des pores de diamètre inférieur à 300 Å, et 55% du volume poreux total est associé à des pores de diamètre supérieur à 600 Å. Il convient de remarquer que la méthode de préparation de ce support comprend une seule phase de synthèse, conduisant habituellement à un mélange des différentes phases cristallographiques de l'alumine.
- Le brevet EP1,142,637 décrit la préparation d'un catalyseur pour l'hydroconversion de distillat. Le support est de l'alumine mixte micro (50 à 75% en poids) et macro poreuse (50 à 25% en poids). Par microporeuse, les auteurs entendent que 95% du volume de cette alumine correspond à un diamètre de pores inférieur à 80 Å. Par macroporeuse, les auteurs entendent qu'au moins 70% du volume de cette alumine correspond à un diamètre de pores compris entre 60 Å et 600 Å. Les méthodes de préparation citées ( y compris celle du brevet EP1,142,637) font appel à la précipitation en une ou plusieurs étapes d'un gel, suivi d'une mise en forme et d'un traitement thermique. Dans ce cas, la micro et la macroporosité sont imbriquées les unes dans les autres sans ordre hiérarchique.
- Les brevets EP0758919 et EP0882503 décrivent la préparation de catalyseurs à haute activité. Les applications visées sont les opérations d'hydrotraitement (hydrodéazotation, hydrodésulfuration, hydrodémétallation, hydroconversion, hydrocraquage), d'hydrogénation/déshydrogénation, de reformage, d' isomérisation et le procédé Claus. Ces brevets sont centrés sur une méthode de préparation de catalyseur, à savoir l'introduction d'un agent chélatant avant, pendant ou après l'imprégnation de la phase active. L'influence de cet agent chélatant serait de créer une interaction entre l'alumine amorphe et la phase active, cette interaction étant identifiée par la présence à la surface d'une alumine micro-cristalline de taille comprise en 8 Å et 25 Å, en plus de l'alumine gamma servant de support et qui possède une taille de cristallite supérieure à 30 Å. L'apparition de cette phase nano-cristalline conduit à l'augmentation de la surface spécifique ainsi qu'à l'apparition d'une structure mésoporeuse bi modale comprenant une première gamme de pores de taille inférieure à 40 Å et une seconde gamme de pores de taille supérieure à 50 Å. Les mesures de porosité sont effectuées sur la branche de désorption azote. Le catalyseur obtenu a une surface d'au moins 100 m²/g.
- L'article de M. Pan et al, J. Memb. Sci, 158 (1999) 235-241( "Journal de la science des membranes") décrit la préparation de membranes d'alumines nanoporeuses par dépôt chimique en phase vapeur (CVD). L'utilisation d'une telle technique conduit à un recouvrement de la surface du support (ici une alumine alpha de 0,2 micron de taille de pores) de façon homogène. Cependant, du fait de la technique utilisée, le dépôt ne créé pas de porosité et conduit à une décroissance de la surface spécifique.
- Le brevet US 5,518,979 traite de supports de catalyseurs à base d'alumine de transition résistant à l'abrasion. Le support d'alumine est constitué d'alumine gamma et kappa (avec 10% maximum d'alumine delta) ou d'alumine thêta et kappa (avec 10% maximum d'alumine alpha) et possède une distribution soit monomodale, soit bimodale dans une gamme de pores de taille comprise entre 100 Å et 1500 Å et possédant une surface allant de 33 m²/g à 63 m²/g (déterminée par porosimétrie au mercure). La méthode de préparation décrite dans ce brevet consiste à mélanger deux précurseurs différents d'alumine, à savoir un précurseur d'alumine amorphe conduisant après calcination à l'alumine kappa, et un précurseur tel qu'une boehmite ou pseudo-boehmite conduisant après calcination aux alumines gamma, delta ou thêta.
- Cini et al, dans J. Memb. Sci., 55 (1991) 199 (Journal de la science des membranes") traitent de la préparation de membranes céramiques pour s'en servir comme support de catalyseurs. Ils utilisent des supports d'alumine alpha macroporeuse, de distribution de taille de pores multimodale, puisque ces supports sont des tubes céramiques comprenant une première couche de diamètre de pores 85 nm, d'une seconde couche de diamètre 650 nm et d'une troisième couche de diamètre 3000 nm. Sur cette alumine est déposé un sol de boehmite, précurseur d'une alumine gamma qui développerait une surface spécifique estimée par les auteurs à 130 m²/g. Ils arrivent à déposer jusqu'à 9% d'alumine, permettant en cela une augmentation de la surface spécifique de 1 à 13 m²/g. L'alumine déposée possède une taille de pores comprise entre 2,5 et 4,5 nm. Les films déposés ont une épaisseur allant 3 à 57 µm, ce qui indique clairement que l'alumine se dépose soit dans la porosité de la couche la plus macroporeuse, soit à la surface des tubes.
- Le brevet EP 0586745 décrit la formation d'une membrane céramique réalisée par un support purement mésoporeux (diamètre de pores compris entre 3 et 5nm) et microporeux (diamètre de pores inférieur à 2 nm). Cette porosité n'est pas apte à résoudre les problèmes de limitation diffusionnelle intragranulaire.

### Description sommaire de l'invention

Pour la bonne clarté de ce qui suit, on appelle solide préformé la partie du support porteur de la porosité principale, la couche surfacique ajoutée au solide préformé apportant la porosité secondaire.

On appelle simplement support selon l'invention le support final constitué du solide préformé et de la couche surfacique.

L'invention décrit donc un support de catalyseur et un procédé de fabrication du dit support.

Le support objet de l'invention est composite, multi-modal, et majoritairement composé d'un mélange d'alumine théta et/ou alpha, à l'intérieur duquel est déposée une couche d'alumine amorphe ou une couche d' alumine cristallisée de formes cristallines choisies parmi les formes suivantes : gamma, delta, théta, chi ou kappa.

La création de cette couche se fait soit à partir d'un solide préformé composé d'un mélange d'alumines thêta et/ou alpha, suivi d'une étape d'imprégnation d'un sel d'aluminium, soit par dissolution partielle ou totale de l'alumine du support au moyen d'un agent de dissolution, suivi d'une étape de précipitation dudit sel d'aluminium.

Le support ainsi formé possède une surface spécifique inférieure à 90 m2/g et un volume poreux présentant une distribution au moins bimodale, définissant une porosité principale correspondant aux pores de plus grande taille et une porosité secondaire correspondant aux pores de plus petite taille, ces deux porosités étant en communication.

Cette distribution bimodale présente en outre une caractéristique de structure que l'on peut résumer en disant que tout élément de la porosité principale communique soit avec l'extérieur du support, soit avec au moins un élément de la porosité secondaire, la locution "soit" n'étant pas à prendre dans un sens exclusif, ce qui signifie qu' un élément de porosité principale pourra communiquer avec l'extérieur et avec un autre élément de porosité secondaire. D'autres éléments de la porosité principale peuvent communiquer entre eux.

Dans la suite du texte, pour qualifier cette caractéristique de structure, on parlera de porosité ordonnée, sachant que dans le cas ou le support possède éventuellement un troisième niveau de porosité, ce troisième niveau présenterait la même caractéristique de structure par rapport au second niveau.

L'intérêt d'une structure de porosité ordonnée est de réduire le risque de limitation diffusionnelle intra granulaire, en guidant les réactifs ou les espèces devant être adsorbées selon un cheminement qui leur permet d'atteindre plus facilement la porosité secondaire que si cette dernière était répartie de façon aléatoire au sein de la porosité principale.

En effet, conséquence de cette structure ordonnée, les réactifs pénétreront à l'intérieur du support en venant de l'extérieur en passant préférentiellement par la porosité principale, puis ils atteindront la porosité secondaire à partir de la porosité principale, et ainsi de suite.

La méthode de préparation du support objet de la présente invention est caractérisée par l'utilisation d'un solide préformé sur lequel on effectue un dépôt de couche surfacique suivi d'une calcination.

Le dépôt de la couche surfacique pourra être obtenu à partir d'un sel d'aluminium externe, le sel d'aluminium étant dissous dans un solvant protique et ayant une source acide ou basique.

La source acide du sel d'aluminium, pourra dans certains cas posséder un contre-ion minéral choisi dans le groupe formé par le chlorure d'aluminium, le sulfate d'aluminium, le nitrate d'aluminium.

Dans d'autres cas, la source acide du sel d'aluminium pourra posséder un contre ion organique tel qu'un groupement carboxylique.

Enfin dans d'autres cas encore, la source basique du sel d'aluminium pourra être l'aluminate de sodium et/ou l'aluminate de potassium.

Une autre méthode de préparation du support selon l'invention consiste à apporter la source d'aluminium par dissolution partielle du solide préformé, cette dissolution étant provoquée par l'apport d'une source acide, basique et/ou complexante.

Dans ce cas, l'agent complexant le sel d' aluminium pourra être choisi dans le groupe formé par le citrate, l'oxalate, le formiate, l'acetylacétone, le fluor, le sulfate, et plus particulièrement dans le groupe formé par le citrate, l'oxalate ou le formiate.

L'utilisation des supports objets de la présente invention à des fins catalytiques nécessite le dépôt d'une phase catalytique qui ne sera pas décrite dans le présent texte, mais sera décrite en fonction des applications dans des demandes ultérieures relatives à ces applications.

### Description détaillée de l'invention

L'invention décrit un procédé de fabrication d'un support de catalyseur composite multi-modal, c'est à dire présentant une porosité distribuée en au moins une porosité principale et une porosité secondaire de taille de pores plus petite que celle de la porosité principale, ces deux porosités communiquant entre elles en respectant une structure ordonnée.

La porosité principale est supportée par un solide majoritairement constitué d'un mélange d'alumine thêta et alpha, à l'intérieur de laquelle est déposée une couche d'alumine amorphe ou d'alumine cristallisée de formes cristallines choisies parmi les formes suivantes: gamma, delta, thêta, chi ou kappa, la dite couche supportant la porosité secondaire.

La création de cette couche supportant la porosité secondaire se fait généralement à partir d'un solide préformé composé d'un mélange d'alumines thêta ou alpha, suivi dans une première variante d'une étape d'imprégnation d'un sel d'aluminium ou, dans une seconde variante, par dissolution totale ou partielle de l'alumine du solide préformé au moyen d'un agent de dissolution, suivi d'une étape de précipitation dudit sel d'aluminium.

Le support ainsi formé possède une surface spécifique inférieure à 90 m²/g, de préférence inférieure à 80 m²/g, de manière très préférée inférieure à 75 m²/g, un volume poreux de structure au moins bimodale, présentant une porosité principale et une porosité secondaire interconnectée, cette structure de pores étant en outre ordonnée au sens défini par la règle "tout élément de la porosité principale communique soit avec l'extérieur, soit avec au moins un élément de la porosité secondaire".

Le solide préformé peut soit être obtenu en tant que tel chez un fabriquant, soit être lui même fabriqué selon des techniques connues de l'homme du métier. L'invention ne porte pas sur ce solide préformé en tant que tel, mais essentiellement sur l'adjonction à ce solide préformé, porteur de la porosité principale, d'un élément additionnel porteur de la porosité secondaire, éventuellement d'une porosité tertiaire ou quaternaire.

La fabrication du support objet de la présente invention comprend les étapes suivantes:

### a) choix de l'alumine composant le solide préformé

Pour constituer le solide préformé, tout composé d'alumine de formule générale Al₂O₃, nH₂O peut être utilisé. Sa surface spécifique initiale sera généralement comprise entre 150 et 600 m²/g. On peut en particulier utiliser des composés hydratés d'alumine tels que : l'hydrargillite, la gibbsite, la bayerite, la boehmite, la pseudo-boehmite et les gels d'alumine amorphe ou essentiellement amorphe.

On peut également utiliser les formes déshydratées de ces composés qui sont constituées d'alumines de transition, et qui comportent au moins une des phases cristallines choisies dans le groupe formé par : rho, chi, eta, gamma, kappa, thêta, delta et alpha. Les éléments de ce groupe se différencient essentiellement par l'organisation de leur structure cristalline.

Lors de traitements thermiques, ces différentes formes sont susceptibles d'évolution entre elles, selon une filiation complexe qui dépend des conditions opératoires du traitement.

### b) mise en forme des supports

La mise en forme du support peut se faire selon toute technique connue de l'homme du métier. La mise en forme peut être réalisée par exemple par extrusion, par pastillage, par la méthode de la coagulation en goutte ("oil-drop" dans la terminologie anglo-saxonne), par granulation au plateau tournant, ou par toute autre méthode bien connue de l'homme du métier.

Les supports préparés selon l'invention ont généralement la forme de sphères ou d'extrudés.

Par ailleurs, les supports mis en oeuvre selon la présente invention peuvent avoir été traités, ainsi qu'il est bien connu de l'homme de l'art, par des additifs pour faciliter la mise en forme et/ou améliorer leurs propriétés mécaniques finales.

A titre d'exemple d'additifs, on peut citer notamment la cellulose, la carboxy-méthyl-cellulose, la carboxy-ethyl-cellulose, du tall-oil, les gommes xanthaniques, des agents tensio-actifs, des agents floculants comme les polyacrylamides, le noir de carbone, les amidons, l'acide stéarique, l'alcool polyacrylique, l'alcool polyvinylique, des biopolymères, le glucose, les polyéthylènes glycols, etc.

Le réglage de la porosité caractéristique des supports de l'invention est opéré partiellement lors de cette étape de mise en forme des particules de supports.

On entend par réglage de la porosité l'obtention des caractéristiques de cette dernière à savoir, la distribution au moins bi-modale, l'interconnection des porosités principale et secondaire, et le caractère ordonné.

### c) séchage ou calcination du solide préformé

Le séchage du solide préformé est effectué par toute technique connue de l'homme du métier.

Pour obtenir le support de la présente invention, il est préférable de calciner de préférence en présence d'oxygène moléculaire, par exemple en effectuant un balayage d'air, à une température inférieure ou égale à 1200°C.

Au moins une calcination peut être effectuée après l'une quelconque des étapes de la préparation.

Ce traitement de séchage ou de calcination peut être effectué en lit traversé, en lit léché ou en atmosphère statique. Par exemple, le four utilisé peut être un four rotatif tournant, ou être un four vertical à couches traversées radiales.

Les conditions de calcination, température et durée dépendent non seulement de la température maximale d'utilisation du support, mais aussi de la surface spécifique qu'on désire atteindre. Ainsi, il est souhaitable d'avoir une surface spécifique mesurée par adsorption azote inférieure à 80 m²/g, de préférence inférieure à 50 m²/g.

En outre, le solide préformé ainsi calciné ne présente par diffraction X que les raies caractéristiques des formes cristallines thêta, kappa ou alpha.

Les conditions préférées de calcination se situent entre plus d'une heure à 500°C, et moins d'une heure à 1200°C. La calcination peut être opérée en présence de vapeur d'eau. La calcination peut être éventuellement effectuée en présence d'une vapeur acide ou basique. Par exemple, la calcination peut être réalisée sous pression partielle d'ammoniaque.

### d) dépôt de la couche surfacique du support

Il s'agit ici de générer une porosité supplémentaire sur la porosité du solide préformé. Cette porosité supplémentaire est appelée secondaire par opposition à la porosité principale du solide préformé.

On peut utiliser toute technique qui génère la présence d' un sel d'aluminium dans la porosité principale du support, puis transformer ce sel en hydroxyde.

On entend par sel, toute forme ionique de l'aluminium soluble dans un solvant protique, de préférence l'eau. Les colloïdes d'oxyde ou d'hydroxyde d'aluminium sont ainsi totalement exclus du domaine de l'invention.
- Selon un premier mode de préparation, on peut apporter ce sel d'aluminium par imprégnation du support à l'aide d'un sel d'aluminium externe.

Par externe, on entend que la source d'aluminium n'est pas apportée par le support lui-même. La source d'aluminium peut être soit sous forme acide, soit sous forme basique.

Parmi les sources acides, on peut citer celles possédant un contre-ion minéral, par exemple le chlorure d'aluminium, le sulfate d'aluminium, le nitrate d'aluminium ou celles possédant des contre-ions organiques, tel que par exemple, un groupement carboxylique.

Parmi les formes basiques, on peut citer les sels basiques d'aluminium tels que par exemple, l'aluminate de sodium et l'aluminate de potassium.

Ces sels d'aluminium sont dissous dans un solvant protique (de préférence l'eau) à hauteur de la concentration en aluminium désirée. Cette concentration est bien sur gouvernée par la quantité désirée d'aluminium devant être déposée sur le support alumine, mais également par la solubilité du sel d'aluminium dans le solvant.

Dans cette solution peut être ajouté un ou plusieurs agents complexants le sel d'aluminium. Ces agents complexants sont connus de l'homme de l'art.

On peut par exemple citer J. Kragten, dans «Atlas of Metal-ligand equilibria in Aqueous Solution » ("Atlas des équilibres des ligands métalliques dans les solutions aqueuses"), Ellis Horwood Limited Pub., 1978 pour obtenir les valeurs de constante de complexation avec l'aluminium (acétylacétone, citrate, fluor, sulfate, formiate, oxalate, etc).

On peut également ajouter un agent basique, par exemple l'ammoniac, la soude, la potasse, etc, ou considéré comme une source basique par décomposition thermique, par exemple l'urée qui provoque la précipitation du sel d'aluminium.
- Selon un autre mode préféré de préparation, la source d'aluminium peut être apportée par dissolution partielle du solide préformé. Cette dissolution peut être provoquée par l'apport d'une source acide, basique et/ou complexante connu de l'homme de l'art pour augmenter la solubilité de l'aluminium. Pour plus de détail sur ces différentes sources, on peut citer Baes et Mesmer dans "The Hydrolysis of Cations", ("L'hydrolyse des cations") Krieger Publishing Company, 1986 ; et J. Kragten, dans "Atlas of Metal-Ligand equilibria in Aqueous Solution", (ouvrage précédemment cité) Ellis Horwood Limited Pub., 1978.
- On peut également utiliser simultanément ou successivement (et dans ce cas d'abord la dissolution du solide préformé, puis l'introduction d'un sel d'aluminium) les deux modes de préparation précédents de façon à augmenter la quantité d'aluminium dissoute et/ou augmenter ou diminuer la porosité.
   L'imprégnation de ces sels ou de ces sources se fait selon des techniques connues de l'homme de l'art. Préférentiellement, on utilisera la technique d'imprégnation à humidité naissante ou imprégnation à sec.

### e) calcination finale du support

Une calcination finale du support formé à l'issue des étapes a), b), c), d) peut éventuellement être effectuée par toute technique connue de l'homme du métier.

Pour obtenir le support de la présente invention, il est préférable de calciner le support et de préférence en présence d'oxygène moléculaire, par exemple en effectuant un balayage d'air, à une température inférieure ou égale à 1100°C.

Au moins une calcination peut être effectuée après l'une quelconque des étapes précédemment décrites de la préparation soit a), b), c).

Ce traitement peut être effectué en lit traversé, en lit léché ou en atmosphère statique. Par exemple, le four utilisé peut être un four rotatif tournant ou être un four vertical à couches traversées radiales.

Les conditions de calcination, température et durée dépendent principalement de la température maximale d'utilisation du catalyseur. Les conditions de calcination finale se situent préférentiellement entre plus d'une heure à 200°C, et moins d'une heure à 1000°C.

La calcination finale du support peut être opérée en présence de vapeur d'eau. La calcination finale peut être éventuellement effectuée en présence d'une vapeur acide ou basique. Par exemple, la calcination finale peut être réalisée sous pression partielle d'ammoniaque.

Le support préparé selon la méthode précédemment décrite, c'est à dire en suivant les étapes a); b); c); d); e) possède les caractéristiques suivantes :
- Une surface spécifique mesurée par isotherme d'adsorption azote inférieure à 90 m²/g de préférence inférieure à 80 m²/g, de manière très préférée inférieure à 75 m²/g.
- Un volume poreux obtenu par intrusion mercure d'au moins 0,3 cm3/gramme, de préférence inférieure à 0,28 cm3/g, de manière très préférée inférieure à 0,25 cm3/g.
- Une répartition de porosité au moins bimodale permettant de distinguer une porosité principale caractérisée en ce qu'au moins 80%, de préférence au moins 85%, de manière très préférée 90% du volume poreux total correspond à des pores de taille supérieure à 15 nm, et en ce qu' au moins 3%, de préférence au moins 4%, de manière très préférée 5% du volume poreux total correspond à des pores de taille inférieur à 12 nm.
- Une relation d'ordre entre la porosité principale et la porosité secondaire définie par le fait que tout élément de la porosité principale communique soit avec l'extérieur de la particule, soit avec au moins un élément de la porosité secondaire, la locution soit étant à prendre dans un sens non exclusif. Cette structure ordonnée peut être observée par microscopie électronique à balayage, (MEB) en étudiant la texture sur fracture.
- Des phases cristallographiques déterminées par diffraction des rayons X correspondant aux alumines alpha ou thêta ou kappa ou delta ou gamma.

### Exemple 1

On utilise une alumine macroporeuse de surface spécifique déterminée par la méthode BET égale à 28 m2/g.

Les phases cristallographiques de cette alumine macroporeuse déterminées par diffraction des rayons X correspondent à de l'alumine thêta et de l'alumine alpha (respectivement 30 % et 70%).

30 g de cette alumine macroporeuse est imprégnée par une solution comprenant 68,3 g de nitrate d'aluminium nonahydraté à 97% massique et 33,5 ml d'eau distillée.

La dite solution est ajoutée goutte à goutte. Le solide ainsi obtenu est laissé en maturation pendant 1h à température ambiante, puis est mis à l'étuve à 120°C pendant 12 heures.

Le solide est ensuite calciné sous air à 530°C pendant 2h.

Le solide obtenu présente une surface spécifique de 50 m²/g, soit un gain de surface de 85% par rapport à l'alumine de départ.

Ce solide possède un volume poreux total de 0,52 cm³/g déterminé par intrusion mercure avec la répartition de pores suivante:
- 62% du volume poreux est généré par des pores de taille supérieure à 100 nm
- 32% du volume poreux total est généré par des pores de taille comprise entre 100 nm et 15 nm
- 6% du volume poreux total est généré par des pores de taille inférieure à 12nm.
   La porosité principale supérieure à 15 nm représente donc 94% de la porosité totale. L'étude de l'échantillon par microscopie électronique à balayage sur fracture montre la présence de particules d'alumine gamma de porosité inférieure à 10 nm à la surface de l'alumine macroporeuse.

## Revendications

1. Support de catalyseur à base d'alumine possédant les caractéristiques suivantes :
- une surface spécifique mesurée par isotherme d'adsorption azote inférieure à 90 m²/g.
- un volume poreux total mesuré par intrusion mercure d'au moins 0,3 cm³/g
- une répartition de porosité au moins bimodale permettant de distinguer une porosité principale **caractérisée par le fait qu'**au moins 80 % du volume poreux total correspond à des pores de taille supérieure à 15 nm, et une porosité secondaire **caractérisée par le fait qu'**au moins 3 % du volume poreux total correspond à des pores de taille inférieure à 12nm.
- une relation d'ordre entre la porosité principale et la porosité secondaire définie **par le fait que** tout élément de la porosité principale communique soit avec l'extérieur de la particule de support, soit avec au moins un élément de la porosité secondaire, la locution soit étant à prendre dans un sens non exclusif.
- des phases cristallographiques déterminées par diffraction des rayons X correspondant aux alumines alpha ou thêta ou kappa ou delta ou gamma.

2. Support selon la revendication 1 dans lequel au moins 85% du volume poreux total correspond à des pores de taille supérieure à 15 nm et au moins 4% du volume poreux total à des pores de taille inférieure à 12 nm.

3. Méthode de préparation du support selon l'une des revendications 1 ou 2 **caractérisée par** l'utilisation d'un solide préformé sur lequel on effectue un dépôt de couche surfacique suivi d'une calcination et dans laquelle ledit dépôt est réalisé en utilisant simultanément ou successivement la dissolution du solide préformé et l'introduction d'un sel d'aluminium externe, la dissolution du solide préformé étant effectuée avant l'introduction d'un sel d'aluminium dans le cas où les modes de préparation sont effectuées successivement, ladite introduction d'un sel d'aluminium étant effectuée par la technique d'imprégnation à humidité naissante ou d'imprégnation à sec.

4. Méthode de préparation du support selon la revendication 3 dans laquelle le dépôt de la couche surfacique est obtenu à partir d'un sel d'aluminium externe, le sel d'aluminium étant dissous dans un solvant protique et ayant une source acide ou basique.

5. Méthode de préparation du support selon la revendication 4 dans laquelle la source acide du sel d'aluminium, possède un contre ion minéral choisi dans le groupe formé par le chlorure d'aluminium, le sulfate d'aluminium, le nitrate d'aluminium.

6. Méthode de préparation du support selon la revendication 4 dans laquelle la source acide du sel d'aluminium possède un contre ion organique tel qu'un groupement carboxylique.

7. Méthode de préparation du support selon la revendication 4 dans laquelle la source basique du sel d'aluminium est l'aluminate de sodium et/ou l'aluminate de potassium.

8. Méthode de préparation du support selon la revendication 3 dans laquelle la source d'aluminium est apportée par dissolution partielle du solide préformé, cette dissolution étant provoquée par l'apport d'une source acide, basique et/ou complexante.

9. Méthode de préparation du support selon la revendication 8 dans laquelle l'agent complexant le sel d'aluminium est choisi dans le groupe formé par le citrate, l'oxalate ou le formiate.

10. Méthode de préparation du support selon la revendication 3 dans laquelle les conditions de calcination finale se situent préférentiellement entre plus d'une heure à 200°C, et moins d'une heure à 1000°C.
